# DEMANDE DE BREVET EUROPEEN

(11) **EP 4 803 341 A1**
(43) Date de publication de la demande: **09.09.2026**
(21) Numéro de dépôt: 26161917.5
(22) Date de dépôt: 03.03.2026
(51) Int. Cl.: B60K 35/10

(54) **SYSTÈME DE CONTRÔLE D'UN DISPOSITIF ÉLECTRONIQUE**

(30) Priorité: 03.03.2025 FR 2502100
(71) Demandeur: Meyssonnier, Jérémy, 33160 Saint-Aubin-de-Médoc (FR)
(72) Inventeur: Meyssonnier, Jérémy, 33160 Saint-Aubin-de-Médoc (FR)
(74) Mandataire: Aquinov

(57) **Abrégé**

L'invention a pour objet un système de contrôle d'un dispositif électronique à partir d'un véhicule, comportant : au moins un dispositif de commande du véhicule ; au moins un dispositif de reconnaissance vocale du véhicule ; une unité de communication apte à établir une communication et à échanger des données avec le dispositif électronique ; un dispositif de transition configuré, lors de l'établissement de la connexion, transformer le au moins un dispositif de commande en un au moins un moyen de commande du dispositif électronique ; transmettre au dispositif électronique par l'unité de communication, une première instruction de commande, en réponse à une détection d'une commande manuelle par le premier module de détection ; transmettre au dispositif électronique par l'unité de communication, une deuxième instruction de commande, en réponse à une détection d'une instruction vocale par le second module de détection.

## Description

### Domaine technique

L'invention se rapporte au domaine technique un système de contrôle d'un dispositif électronique. Et notamment le domaine des systèmes de contrôle à partir d'un véhicule.

### Etat de la technique

Il est connu que l'utilisation du téléphone portable au volant peut conduire à des dangers pour les utilisateurs mais également pour les autres automobilistes qui sont aux alentours de l'utilisateurs. Face à la réticence des automobilises à l'arrêt complet de l'utilisation du téléphone portable au volant, des solutions alternatives ont été développées avec par exemple les fonctions de mise en miroir des applications mobiles. Toutefois, ces systèmes de commande offrent qu'une possibilité limitée de continuer à utiliser le dispositif électronique, en effet, il n'est possible d'accéder qu'à une partie des applications et leur accès est restreint à quelques fonctionnalités. Du fait de l'accès limité à leur dispositif électronique, de nombreux utilisateur continuent ainsi à utiliser leur dispositif électronique souvent placé sur un support, soit en le tenant dans leur main. Cette pratique restant contraire à la législation.

L'utilisation du dispositif électronique au volant demeure une source majeure d'augmentation du nombre d'accidents. Il est connu que 69% des automobilistes utilisent leur dispositif électronique au volant et près d'un accident corporel sur dix est lié à l'usage du téléphone au volant. Le risque d'accident est multiplié par vingt-trois lorsque l'utilisateur écrit un message en conduisant. Ce problème se pose également pour tout type de véhicule motorisé.

L'invention se place donc dans ce contexte et cherche à résoudre l'ensemble des inconvénients précités. Ainsi, l'invention cherche à proposer un système de contrôle complet du dispositif électronique en utilisant les commandes du véhicule, sans nécessiter de modifications du véhicule, en utilisant les commandes intégrées de la voiture ainsi que la reconnaissance vocale du véhicule.

### Présentation de l'invention.

L'invention a pour objet un système de contrôle d'un dispositif électronique à partir d'un véhicule, comportant : au moins un dispositif de commande du véhicule comportant un premier module de détection de commande manuelle ; au moins un dispositif de reconnaissance vocale du véhicule comportant un deuxième module de détection de commande vocale ; une unité de communication apte à établir une communication et à échanger des données avec le dispositif électronique, un dispositif de transition configuré pour, suite à l'établissement de la connexion entre le dispositif électronique et le véhicule, transformer le au moins un dispositif de commande du véhicule en un au moins un moyen de commande du dispositif électronique; transmettre au dispositif électronique par l'unité de communication une première instruction de commande d'au moins un premier type de fonction dudit dispositif électronique, en réponse à une détection d'une commande manuelle par le premier module de détection ; transmettre au dispositif électronique par l'unité de communication, une deuxième instruction de commande d'au moins un deuxième type de fonction dudit dispositif électronique, en réponse à une détection d'une instruction vocale par le second module de détection.

Le système de contrôle du dispositif électronique peut permettre un contrôle complet et direct du dispositif électronique. Le système peut permettre d'accéder et d'interagir avec toutes les fonctionnalités du dispositif électronique.

La système de contrôle du dispositif électronique peut être intégré directement dans le véhicule. Dans un autre mode de réalisation, le système de contrôle peut être intégré à un boitier adapté à être connecté au véhicule de sorte que lorsque ledit boitier est connecté au véhicule, ledit système puisse fonctionner comme s'il était nativement installé dans ledit véhicule.

Par véhicule, on entend tout véhicule motorisé. Dans un exemple de réalisation, on entend par véhicule, tout véhicule terrestre tels que les voitures, camions, bus, moto, scooter, tracteur, véhicule agricole ou industriel. Dans un autre exemple de réalisation, on entend par véhicule, tout véhicule aérien tel que des avions.

Par dispositif électronique, on peut entendre un téléphone, un ordinateur portable, une montre connectée, une tablette électronique ou tout autre appareil électronique portable.

Le système de contrôle peut comporter une pluralité de dispositifs de commande du véhicule. On entend par dispositif de commande du véhicule toutes commande manuelle du véhicule, par exemple de façon non limitative molette, bouton de la console centrale, commande au volant.

Le dispositif de reconnaissance vocale peut être celui du véhicule.

La présence de l'unité de communication peut permettre l'échange de données entre le véhicule et le dispositif électronique. Par données, on entend des données de média par exemple audio ou vidéo mais également des données de contrôle, par exemple des instructions de commande ou de contrôle.

Dans un mode de réalisation, la transformation du dispositif de commande du véhicule en un moyen de commande du dispositif électronique peut être réalisé par le dispositif de transition, par exemple bouton dédié. Le dispositif de transition peut ainsi offrir une utilisation polyvalente des contrôles existants. Dans un autre mode de réalisation, la transformation peut être réalisée par une pression longue sur l'un des dispositifs de commande du véhicule. Dans un mode de réalisation différent, la transformation peut être réalisée par la sélection dans un menu du tableau de bord.

La transformation peut être assurée par un bouton adapté pour permettre au conducteur de choisir quelle interface contrôler à tout moment.

La transformation des dispositifs de commande du véhicule en des moyens de commande du dispositif électronique peut permettre à l'utilisateur de contrôler le dispositif électronique de manière intuitive et sécurisée. Chacune des commandes du véhicule peut alors être interprétée comme des commandes de contrôle sur le dispositif électronique. Lors de cette transformation, le dispositif de commande vocale du véhicule peut être adapté pour contrôler le dispositif électronique. Ainsi, des actions comme le défilement, le clic ou encore l'activation de la commande vocale sont traduites en commandes spécifiques au dispositif électronique.

Par exemple, la molette peut être utilisée pour naviguer à travers les applications ou encore les éléments de l'interface du téléphone, les boutons peuvent permettre de sélectionner des éléments particulier des applications, activer des fonctionnaires spécifiques, interagir avec les applications ou directement dans lesdites applications. La molette tactile peut être utilisée pour des gestes spécifiques du dispositif électronique comme le zoom ou le défilement rapide dans une liste. Notamment les boutons de commande au volant peuvent permettre d'obtenir un accès rapide aux fonctions essentielles du dispositif électronique. Dans un mode de réalisation, le dispositif de commande peut comporter des commandes gestuelles. Dans un autre mode de réalisation, le dispositif de commande peut comporter des commandes oculaires, c'est-à-dire qu'une reconnaissance visuelle des mouvements oculaires pourraient permettre de réaliser des gestes spécifiques comme le défilement d'une liste ou le choix d'une application assimilable à un clic de sélection.

Dans un mode de réalisation, la molette peut être utilisée pour déplacer un curseur sur l'écran du dispositif électronique permettant d'offrir à l'utilisateur une flexibilité maximale pour interagir avec des applications variées.

Dans un autre mode de réalisation, la molette peut permettre de sélectionner directement des éléments d'interface, par exemple des icones d'applications permettant d'offrir à l'utilisateur une utilisation simple et peu distrayante dans l'interaction avec les applications.

Par premier type de fonction, on peut entendre un défilement des application, l'ouverture d'une message, le défilement rapide dans une liste, l'accès à des services multimédias sans quitter les commandes du véhicule, la sélection d'un contact en vue d'un appel, la gestion de listes musicales, de changement de chanson. La première instruction peut être associée à une fonction de contrôle direct du dispositif électronique.

L'utilisation des dispositifs de commandes du véhicule pour contrôler le dispositif électronique permet d'offrir une interface qui soit intuitive et familière pour l'utilisateur, ce qui peut ainsi permettre de réduire la distraction et améliorer la sécurité routière.

Par deuxième type de fonction, on peut entendre le passage d'un appel ou une réponse à un message textuel. La seconde instruction peut être associée à une fonction d'assistant vocal du dispositif électronique.

Pour l'utilisateur, le fait de pouvoir utiliser les dispositifs de commandes manuelle, le dispositif de reconnaissance vocale ou les deux, confère au système une flexibilité accrue dans le contrôle du dispositif électronique en s'adaptant aux préférences de l'utilisateur et aux différentes situation de conduite.

Dans un mode de réalisation particulier de l'invention, le système peut être directement intégré au logiciel de la marque du constructeur du véhicule.

La fait de pouvoir transformer les dispositifs de commande du véhicule en un moyen de commande du dispositif électronique sans interruption peut permettre de maximiser la sécurité en permettant au conducteur de se concentrer sur la conduite tout en conservant un contrôle total du dispositif électronique à l'aide de commandes simples et familières. Cette transformation peut également permettre de réduire les distractions en éliminant la nécessité de manipuler le téléphone.

Le système est aisé à mettre en œuvre puisqu'il est possible de le configurer et de l'utiliser en évitant l'installation d'un logiciel intermédiaire.

Dans un mode de réalisation, le système peut être intégré au véhicule lors d'une mise à jour de l'ordinateur de bord dudit véhicule.

Dans un autre mode de réalisation, le système peut être nativement intégré au véhicule.

Grâce à l'invention, la mise en place de ce contrôle complet peut permettre d'utiliser toutes les applications et fonctionnalités du dispositif électronique directement par les commandes et autres fonctionnalités de la voiture en minimisant les distractions physiques, permettant d'empêcher l'utilisation du téléphone à la main et d'éviter à l'utilisateur de détourner le regard de la route. De plus, le contrôle indirect mais complet du dispositif électronique par les commandes du véhicule peut permettre de respecter la loi en limitant les distractions physiques et visuelles tout en gardant les mains sur le volant et donc en gardant le contrôle du véhicule.

Avantageusement, le au moins un dispositif de commande comporte un bouton.

L'utilisation d'un bouton peut offrir une interface tactile familière pour l'utilisateur, réduisant ainsi la courbe d'apprentissage.

Avantageusement, le premier module de détection de commande est adapté pour détecter un appui manuel sur le bouton.

Lorsque l'utilisateur interagit avec l'un des dispositifs de commande du véhicule, le premier module de détection de commande qui lui est associé détecte ladite commande d'appui manuel sur le bouton, celle-ci est transmise à une unité de contrôle du dispositif de commande qui communique ladite instruction au dispositif électronique via l'unité de communication.

La détection d'un appui manuel sur le bouton offre l'avantage d'une interaction directe et immédiate, permettant un contrôle précis. Les modes de réalisation de cette détection peuvent être multiples. Dans un mode de réalisation, il est possible d'envisager un capteur de pression capable de détecter différents niveaux d'appui, permettant ainsi une gradation des commandes. Dans un mode de réalisation, un système de détection de la durée d'appui pourrait différencier les pressions courtes et longues, multipliant les possibilités de commande avec un seul bouton. Dans un mode différent de réalisation, un capteur capacitif pourrait détecter le simple contact sans pression, offrant une utilisation plus douce.

Avantageusement, le deuxième module de détection de commande est adapté pour détecter une instruction vocale.

Le dispositif de reconnaissance vocale du véhicule peut permettre d'offrir une interface mains-libres, qui peut permettre d'améliorer la sécurité en permettant au conducteur de garder les mains sur le volant. Le dispositif de reconnaissance vocale du véhicule peuvent comporter un microphone intégré dans l'habitacle, des microphones directionnels pour chaque siège, un système de réduction de bruit ambiant, ou une activation par mot-clé spécifique.

Le dispositif de reconnaissance vocale du véhicule peut permettre d'assurer une interaction fluide et sécurisée avec le dispositif électronique en réduisant les distractions tout en permettant d'effectuer des actions importantes pour l'utilisateur.

L'utilisation du dispositif de reconnaissance vocale peut permettre au conducteur d'interagir avec son smartphone sans avoir à utiliser ses mains, ce qui peut permettre de renforcer la sécurité et la fluidité d'utilisation. Par exemple lorsqu'un message arrive dans une application de messagerie, un appui long sur le bouton de reconnaissance vocale peut permettre de dicter et d'envoyer une réponse sous forme de message vocal ou de retranscrire le texte énoncé oralement en message écrit.

Dans un mode de réalisation, un système de détection de mots-clés pour l'activation peut permettre une utilisation ciblée et éviter les déclenchements intempestifs.

Avantageusement, le dispositif de reconnaissance vocale est adapté pour transmettre à un assistant vocal du dispositif électronique les instructions vocales détectées.

L'utilisation du système vocal du véhicule peut permettre à l'utilisateur de donner des instructions vocales au dispositif électronique, le véhicule pouvant activer l'assistant vocal du dispositif électronique.

Dans un mode de réalisation, le dispositif de reconnaissance vocale peut comporter un système de traduction des commandes spécifiques au véhicule vers des commandes compatibles avec l'assistant.

Avantageusement, le système de contrôle comprend un module de détection de connexion adapté pour détecter une connexion du dispositif électronique au véhicule et pour, à la suite de ladite détection de connexion, déclencher les étapes de transformation et de transmission par activation du dispositif de transition en réponse à ladite détection de connexion.

Le module de détection adapté pour détecter la connexion du dispositif électronique entrainant l'activation du dispositif de transition peut offrir une configuration automatique du système. Dans un mode de réalisation, la détection automatique peut être réalisée sans fil. Dans un autre mode de réalisation, la détection automatique peut comporter un système de reconnaissance par champs proches permettant une connexion quasi instantanée par simple approche du dispositif. Dans un autre mode de réalisation, la détection automatique peut comporter une connexion filaire avec détection de branchement.

La présence de ce module peut permettre une activation automatique du dispositif de transition dès que le dispositif électronique est connecté au véhicule. Le fait d'éliminer la nécessité pour l'utilisateur d'activer manuellement le système peut permettre d'assurer l'utilisation du système en éliminant toute contrainte pour l'utilisateur en garantissant que les fonctionnalités de contrôle du dispositif électronique sont immédiatement disponibles dès que l'utilisateur monte dans le véhicule.

Avantageusement, à la suite de l'activation du dispositif de transition, la détection d'une commande par le premier module de détection entraine l'envoi de la première instruction de commande au dispositif électronique.

La détection d'une commande par le premier module de détection peut être traduite par l'unité de communication comme la simulation d'une interaction directe comme des tapotements, glissements ou pressions longues telles qu'utilisées habituellement sur le dispositif électronique.

Avantageusement, la transformation du au moins un dispositif de commande du véhicule en un au moins un moyen de commande du dispositif électronique est basé sur un système de changement de source.

La transformation est basée sur un système de changement de source, ce qui peut permettre d'offrir une flexibilité accrue dans la gestion des commandes entre le véhicule et le dispositif électronique.

L'utilisation d'un système de changement de source peut permettre une utilisation optimale des interfaces de commande existantes du véhicule, sans nécessiter de matériel supplémentaire dédié au contrôle du dispositif électronique. Dans un mode de réalisation le système de changement de source pourrait être basé sur un basculement de logiciel qui redirige les signaux d'entrée vers différents pilotes de périphériques. Le changement de source peut permettre d'accéder aux données du dispositif électronique. Le changement de source peut permettre de contrôler directement le dispositif électronique.

Lorsque la transformation est effective et que l'utilisateur appuie sur l'un des dispositifs de commande du volant, la transformation est assurée par un protocole de communication mis en place entre les divers dispositifs de commande et une unité centrale du véhicule, par exemple une interface électronique ou le calculateur moteur. Dans un mode de réalisation, la communication est gérée par un bus numérique comme le CAN (Controller area network ou axe de réseau local) ou le LIN (local interconnect network ou réseau local d'interconnexion). Ainsi la détection de la connexion entre le dispositif électronique et le véhicule entraine l'envoi d'un message codé par le bus de communication. L'unité centrale du véhicule peut recevoir ce message, l'interpréter et exécuter la commande associée, à savoir la transformation du dispositif de commande du véhicule en moyen de commande du dispositif électronique. Le message transmis à l'unité centrale contient un identifiant indiquant l'origine du signal, les données représentant l'action demandée ainsi qu'un checksum (somme de données) adapté pour vérifier avec une très haute probabilité que l'intégrité de la commande est préservée.

Par la suite, lorsque le module de détection détecte une commande, un message codé contenant la commande associée est envoyé à l'unité centrale. L'unité centrale reçoit et traite le signal. En retour, de manière sensiblement immédiate, l'unité centrale renvoie au dispositif électronique les informations concernant la commande à réaliser pour contrôler ledit dispositif électronique, par exemple en activant un retour d'information par modification de l'affichage sur l'écran dudit dispositif électronique ou encore un signal sonore confirmant l'activation ou la désactivation d'une fonction.

Avantageusement, le dispositif de reconnaissance vocale est adapté pour distinguer des commandes vocales standard des commandes vocales spécifiques à une application donnée du dispositif électronique.

Le système peut utiliser le dispositif de commande vocale natif du dispositif électronique en actionnant un dispositif de commande particulier sur le volant. Lorsque l'utilisateur appuie sur ce dispositif de commande, il peut passer des appels, envoyer des messages simples, lancer la navigation ou contrôler simplement l'ouverture d'une application. Dans ce mode de réalisation, le contrôle est intuitif et instantané en évitant à l'utilisateur de manipuler l'écran tactile ou les commandes physiques pendant la conduite.

Le système peut utiliser le dispositif de commande vocale du véhicule pour reconnaitre et activer des commandes vocales spécifiques à une application. Par exemple, une pression longue sur le dispositif de commande actionnant la reconnaissance vocale, peut permettre à l'utilisateur de déclencher un mode de commande vocale au sein d'une application spécifique. Dans un mode de réalisation, un utilisateur souhaitant dicter une note vocale ou dicter un message vocale dans une application de messagerie spécialisée, pourrait utiliser le dispositif de commande vocale du véhicule, tout en conservant les mains sur le volant. Dans un mode de réalisation particulier, le système peut être capable de détecter que l'utilisateur demande l'ouverture d'une application en utilisant les commandes vocales standard. Une fois l'application ouverte, le système détecte que les nouvelles commandes vocales émises par l'utilisateur sont spécifiques à l'utilisation. Dans un autre mode de réalisation, un appui bref, c'est-à-dire dont la durée est inférieure à une valeur seuil peut permettre de détecter une commande vocale standard et un appui prolongé, c'est-à-dire donc la durée est supérieure à la valeur seuil peut permettre de détecter une commande vocale spécifique à l'application ouverte.

Cette distinction peut permettre une gestion plus précise et contextuelle des commandes vocales, améliorant ainsi l'efficacité globale du système. Dans un mode de réalisation, un système d'apprentissage automatique, par exemple une intelligence artificielle, peut être implémenté pour améliorer la reconnaissance au fil du temps, s'adaptant aux particularités de prononciation et aux habitudes de l'utilisateur. Une base de données de commandes spécifiques à chaque application, mise à jour automatiquement, peut permettre une flexibilité accrue et une compatibilité avec de nouvelles fonctionnalités.

Avantageusement, les au moins un dispositifs commande associés à des fonctions de sécurité du véhicule sont adaptés pour conserver leur fonctionnalité native.

Les dispositifs de commande critiques liés à la sécurité et au confort du véhicule tels que la climatisation et le chauffage, les clignotants, les feux, les feux de détresse, essuie-glace, le klaxon peuvent rester autonomes et indépendants du mode de contrôle du dispositif électronique y compris lorsque le véhicule est transformé en un mode de contrôle du dispositif électronique. Ces fonctions peuvent rester accessible en tout temps en garantissant de conserver les fonctions critiques du véhicule actives.

Ce maintien de la fonctionnalité des dispositifs de commande liés à la sécurité du véhicule, peuvent ainsi offrir une garantie cruciale de sécurité en préservant les fonctions critiques du véhicule. Cette caractéristique essentielle peut être mise en œuvre de plusieurs manières pour assurer une fiabilité maximale. Un système de priorité absolue pour les commandes de sécurité pourrait être implémenté, garantissant que ces fonctions critiques restent toujours accessibles et opérationnelles, quelles que soient les autres opérations en cours et indépendamment de l'état de connexion ou de contrôle du dispositif électronique. Cette caractéristique peut permettre d'assurer que la sécurité du véhicule n'est jamais compromise par l'intégration du système de contrôle du dispositif électronique.

Dans un mode de réalisation, le système peut comporter un mode de basculement automatique en cas de détection de situation d'urgence permettant une réaction rapide et appropriée aux conditions critiques.

Dans un mode de réalisation, le système peut comporter une implémentation d'une liste blanche de commandes qui ne peuvent jamais être réaffectées, garantissant ainsi que ces fonctions de sécurité restent toujours actives. Dans un autre mode de réalisation, le système pourrait être basé sur un système de priorité, où les commandes liées à la sécurité ont toujours la priorité la plus élevée, surpassant toute autre fonction assignée.

Avantageusement, l'unité de communication est adaptée pour communiquer avec le dispositif électronique par une connexion sans fil.

Une fois le dispositif électronique couplé au véhicule, les commandes détectées par les dispositifs de commande du véhicule ou le dispositif de reconnaissance vocale sont transmises audit dispositif électronique sous forme de signaux de contrôle grâce à l'unité de communication de manière à simuler des interactions directes comme des tapotements, des glissements ou encore des pressions longues.

Dans un mode de réalisation, la connexion sans fil peut être une connexion de type Bluetooth^{®}. Dans un autre mode de réalisation, la connexion sans fil peut être une connexion de type Wi-Fi qui peut permettre d'offrir une bande passante plus élevée et permettant des interactions plus fluides, notamment pour des tâches comme la navigation en temps réel ou le transfert de médias, par exemple audios.

Avantageusement, l'unité de communication est adaptée pour communiquer avec le dispositif électronique par une connexion filaire.

Lorsque la connexion filaire est utilisée, le véhicule peut établir une connexion directe avec le dispositif électronique, ce qui peut permettre de lui transmettre des commandes complexes.

L'utilisation d'une communication filaire entre l'unité de communication et le dispositif électronique, peut permettre une connexion stable qui peut être idéale pour certaines applications exigeantes en termes de bande passante ou de latence.

Avantageusement, le système de contrôle du dispositif électronique est adapté pour fonctionner par l'intermédiaire de l'application mobile de la marque du véhicule de l'utilisateur.

Ce mode de réalisation peut permettre d'améliorer la richesse de communication entre le dispositif électronique et le véhicule. Par exemple, des fonctionnalités spécifiques à la marque pourraient être intégrées aux fonctionnalités, comme un télédiagnostic ou une personnalisation de l'interface.

L'invention a également pour objet un procédé de contrôle d'un dispositif électronique à partir d'un véhicule par un système de contrôle comporte les étapes suivantes : établissement une connexion entre le véhicule et le dispositif électronique ; en réponse à l'établissement de la connexion, transformer au moins un dispositif de commande du véhicule en au moins un moyen de commande du dispositif électronique ; détecter une commande manuelle via un premier module de détection ou une instruction vocale via un second module de détection.

Le procédé peut permettre l'établissement d'un flux de travail clair et structuré pour l'intégration et le contrôle du dispositif électronique. Ce procédé peut assurer une séquence logique d'événements, commençant par l'établissement de la connexion, suivi de la transformation des commandes, et enfin la détection et l'interprétation des commandes. Cette approche structurée peut garantir une intégration cohérente et fiable du dispositif électronique avec les systèmes du véhicule.

Avantageusement, le procédé comporte une étape en réponse à la détection d'une commande manuelle, de transmission au dispositif électronique d'une première instruction de commande associée à une fonction de contrôle direct du dispositif électronique.

Cette étape peut permettre la création d'un lien direct et immédiat entre les actions physiques de l'utilisateur sur les dispositifs de commande du véhicule et les fonctions spécifiques du dispositif électronique entrainant un contrôle rapide et intuitif du dispositif électronique sans nécessiter d'interaction visuelle, ce qui est crucial pour maintenir l'attention du conducteur sur la route.

Avantageusement, le procédé comporte une étape en réponse à la détection d'une instruction vocale, de transmission au dispositif électronique d'une seconde instruction de commande associée à une fonction d'assistant vocal du dispositif électronique.

Cette étape peut permettre l'intégration transparente des capacités de reconnaissance vocale du véhicule avec l'assistant vocal du dispositif électronique permettant une interaction mains libres avec le dispositif électronique, réduisant considérablement les distractions visuelles et manuelles pour le conducteur.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig.1] représente schématiquement les étapes de fonctionnement d'un système de contrôle d'un dispositif électronique selon un mode de réalisation.
[Fig.2] représente schématiquement une portion des dispositifs de commande du véhicule selon un mode de réalisation.

Dans la description qui suit, les éléments identiques, par structure ou par fonction, apparaissant sur différentes figures conservent, sauf précision contraire, les mêmes références.

### Description d'un mode de réalisation.

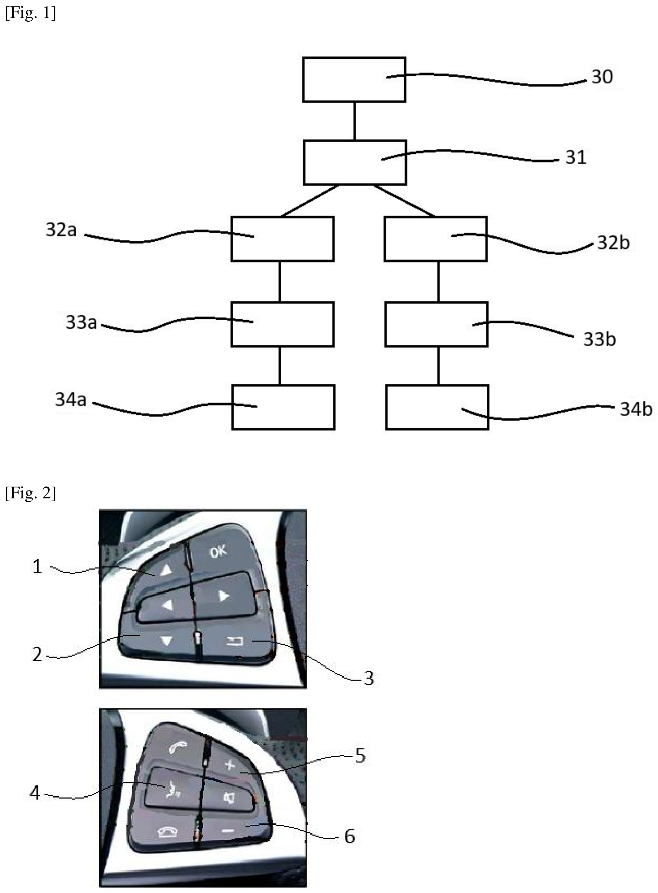

On a représenté en [Fig.1] les étapes de fonctionnement d'un système de contrôle d'un dispositif électronique selon un mode de réalisation. Le système est également décrit en lien avec la [Fig.2] représentant une portion des dispositifs de commande du véhicule selon un mode de réalisation.

Le système est conçu pour contrôler un dispositif électronique à partir d'un véhicule. Dans le cas décrit, le dispositif électronique, est un smartphone, c'est-à-dire un téléphone portable intelligent. Lorsque l'utilisateur monte dans son véhicule, une connexion (30) est établie entre ledit véhicule et le smartphone. Pour cela, le système de contrôle comprend un module de détection de connexion adapté pour détecter une connexion (30) du dispositif électronique au véhicule. En réponse à l'établissement de la connexion, le système de contrôle comporte un dispositif de transition (31) qui est activé selon les modèles de véhicules, soit de manière automatique par simple détection de la présence du smartphone dans l'habitacle et donc sans contrainte pour l'utilisateur, soit par pression sur une commande manuelle spécifique du véhicule, soit par sélection dans un menu dédié du tableau de bord du véhicule. Les fonctionnalités de contrôle du dispositif électronique sont immédiatement disponibles dès que l'utilisateur monte dans le véhicule.

Le dispositif de transition (31) est configuré pour transformer une pluralité de dispositif de commande du véhicule en une pluralité de moyens de commande du smartphone. Les dispositifs de commande du véhicule qui sont transformés sont des commandes manuelles du véhicule, à savoir des boutons de la console centrale, des boutons de commande au volant ou encore la molette de navigation. Le dispositif de transition est configuré pour transformer un dispositif de reconnaissance vocale du véhicule en un moyen de commande du smartphone. Le dispositif de transition fonctionne sur un système de changement de source.

Après la transformation (31), chacune des commandes vocale (32b) ou manuelle (32a) du véhicule est alors interprétée comme une commande de contrôle sur le dispositif électronique.

Une fois la transformation (31) réalisée, dès que l'utilisateur réalise un appui manuel sur le dispositif de commande, celui-ci est détecté par un premier module de détection contenu dans ledit dispositif de commande (32a). Lorsque l'utilisateur interagit avec l'un des dispositif de commande, c'est donc le premier module de détection qui lui est associé qui détecte ladite commande d'appui manuel (32a) et qui la transmet à une unité de contrôle du dispositif (33a) elle-même capable de la traduire comme la simulation d'une interaction directe avec le smartphone.

Une fois la transformation réalisée, dès que l'utilisateur énonce une commande vocale, celui-ci est détecté par un deuxième module de détection de commande vocale (32b) contenu dans le dispositif de reconnaissance vocale du véhicule. Le deuxième module de détection de commande est capable de distinguer des commandes vocales standard et des commandes vocales spécifiques à une application donnée du dispositif électronique. Lorsque l'utilisateur énonce une commande vocalement, le deuxième module de détection associé au dispositif de reconnaissance vocale du véhicule détecte ladite commande vocale (32b) et la transmet à l'unité de contrôle du dispositif (33b) afin de la transformer en commande du smartphone.

Après que l'unité de contrôle a transformé la commande détectée par le premier ou le deuxième module de détection en une commande du smartphone, cette commande du smartphone est transmise à l'unité de communication. L'unité de communication qui la transmet au smartphone pour application de ladite commande sous la forme d'un premier (34a) ou d'un deuxième type de fonction (34b). Dans le cas d'une commande vocale, l'unité de communication transmet la commande détectée à l'assistant vocal du smartphone (34b). L'unité de communication est adaptée pour communiquer avec le dispositif électronique par une connexion sans fil ou par une connexion filaire. Par premier type de fonction, on entend entre autres un défilement des application, l'ouverture d'un message, le défilement rapide dans une liste, l'accès à des services multimédias sans quitter les commandes du véhicule, la sélection d'un contact en vue d'un appel, la gestion de listes musicales, de changement de chanson. Par deuxième type de fonction, on entend entre autres le passage d'un appel ou une réponse à un message textuel.

La manière d'utiliser les différents dispositifs de commande du véhicule après leur transformation par le dispositif de transition est détaillée plus en détail ici.

La molette est utilisée pour naviguer à travers les applications ou encore les éléments de l'interface du téléphone et à leur sélection. En plus de la rotation pour faire défiler les éléments, la molette permet un défilement libre et intuitif à travers les applications ou les menus du smartphone. La molette tactile est utilisée pour des gestes spécifiques du dispositif électronique comme le zoom ou le défilement rapide dans une liste, comme si l'utilisateur utilisait un stylet. Les boutons permettent de sélectionner des éléments particulier des applications, activer des fonctionnalités spécifiques ou encore interagir avec les applications. Notamment les boutons de commande au volant (1, 2, 3, 4, 5, 6) peuvent permettre d'obtenir un accès rapide aux fonctions essentielles du dispositif électronique. En plus des fonctions habituelles telles que le volume (5, 6) ou l'activation des appels, les boutons au volant permettent de naviguer horizontalement et verticalement (1, 2) dans l'interface du smartphone. Cela permet au conducteur de faire défiler les applications, les listes, ou les options de menu directement à partir des commandes du volant.

Par exemple, les dispositifs de commande (1, 2, 3, 4, 5, 6) de la [Fig.2] ont des fonctionnalités différentes lorsqu'ils sont transformés en moyens de commande du dispositif électronique de ce qu'un utilisateur usuel peut connaitre. Par exemple les flèches (1, 2) peuvent permettre par un appui bref de faire défiler les applications ou les menus du dispositif électronique. Par un appui long ou par un double appui sur ces boutons (1, 2) pourraient permettre, de changer les page du dispositif électronique. Un appui bref sur le bouton retour (3) peut permettre un retour de l'action tandis qu'un appui long sur ce même bouton (3) peut permettre à l'utilisateur une fois la connexion (30) établie, de transformer (31) la fonctionnalité des boutons depuis la commande du dispositif électronique vers la commande du véhicule et inversement selon sa volonté, et ce tout en maintenant la connexion (30) active.

Le bouton de commande vocale (4) peut permettre par un appui bref d'activer l'assistance vocale du dispositif électronique et donc contrôler les commandes vocales standard. Un appui long sur ce même bouton (4) peut permettre d'activer l'enregistrement vocal de l'application ouverte et donc contrôler les commandes vocales spécifiques à l'application.

Le système est conçu de sorte que lorsque le dispositif de transition est activé, tous les dispositifs de commande du véhicule relatifs à des fonctions de sécurité conservent leur fonction native. Ainsi, les dispositifs de commande qui sont critiques pour la sécurité et le confort de l'utilisateur sont totalement indépendants du mode dans lequel les dispositifs de commande du véhicule sont transformés en moyens de commande du smartphone. Une fois la transformation faite, si un utilisateur tente d'utiliser l'un des dispositifs de commande associé à la sécurité du véhicule, celui-ci réalisera la fonction prévue par le véhicule et non une commande du smartphone. Parmi les fonctions critiques qui conservent leur fonction native, on retrouve notamment la climatisation, le chauffage, les clignotants, les feux, les feux de détresse, les essuie-glace qui restent autonomes et indépendants.

La description qui précède explique clairement comment l'invention permet d'atteindre les objectifs qu'elle s'est fixée, à savoir proposer un système de contrôle complet du dispositif électronique en utilisant les commandes du véhicule, sans nécessiter de modifications du véhicule, en utilisant les commandes intégrées de la voiture ainsi que la reconnaissance vocale du véhicule, en proposant un système de contrôle d'un dispositif électronique à partir d'un véhicule, comportant au moins un dispositif de commande du véhicule, au moins un dispositif de reconnaissance vocale du véhicule, une unité de communication apte à établir une communication et à échanger des données avec le dispositif électronique et un dispositif de transition configuré pour, lors de l'établissement de la connexion transformer le dispositif de commande du véhicule en un moyen de commande du dispositif électronique; transmettre au dispositif électronique par l'unité de communication une première instruction de commande, en réponse à une détection d'une commande manuelle par le premier module de détection ou transmettre au dispositif électronique par l'unité de communication, une deuxième instruction de commande, en réponse à une détection d'une instruction vocale par le second module de détection tout en conservant actives les commandes de sécurité du véhicule.

Cet objectif est atteint grâce à la mise en place de ce contrôle complet qui permet d'utiliser toutes les applications et fonctionnalités du dispositif électronique directement par les commandes et autres fonctionnalités de la voiture en minimisant les distractions physiques, permettant d'empêcher l'utilisation du téléphone à la main et d'éviter à l'utilisateur de détourner le regard de la route. De plus, le contrôle indirect mais complet du dispositif électronique par les commandes du véhicule peut permettre de respecter la loi en limitant les distractions physiques et visuelles tout en gardant les mains sur le volant et donc en gardant le contrôle du véhicule tout en conservant accessibles les fonctions natives de sécurité du véhicule.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Système de contrôle d'un dispositif électronique à partir d'un véhicule, comportant :
- au moins un dispositif de commande du véhicule comportant un premier module de détection de commande manuelle ;
- au moins un dispositif de reconnaissance vocale du véhicule comportant un deuxième module de détection de commande vocale ;
- une unité de communication apte à établir une communication et à échanger des données avec le dispositif électronique ;
- un dispositif de transition configuré pour :
• suite à l'établissement d'une connexion entre le dispositif électronique et le véhicule (30), transformer le au moins un dispositif de commande du véhicule en un au moins un moyen de commande du dispositif électronique (31) ;
• transmettre au dispositif électronique par l'unité de communication, une première instruction de commande d'au moins un premier type de fonction dudit dispositif électronique (33a), en réponse à une détection d'une commande manuelle par le premier module de détection (32a) ;
• transmettre au dispositif électronique par l'unité de communication, une deuxième instruction de commande d'au moins un deuxième type de fonction dudit dispositif électronique (33b), en réponse à une détection d'une instruction vocale par le second module de détection (32b).

2. Système de contrôle selon la revendication précédente, dans lequel le au moins un dispositif de commande comporte un bouton.

3. Système de contrôle selon la revendication précédente, dans lequel le premier module de détection de commande est adapté pour détecter un appui manuel sur le bouton (32a).

4. Système de contrôle selon l'une des revendications précédentes, dans lequel le deuxième module de détection de commande est adapté pour détecter une instruction vocale (32b).

5. Système de contrôle selon la revendication précédente, dans lequel le dispositif de reconnaissance vocale est adapté pour transmettre à un assistant vocal du dispositif électronique les instructions vocales détectées (33b).

6. Système de contrôle selon l'une des revendications précédentes, dans lequel il comprend un module de détection de connexion adapté pour détecter une connexion du dispositif électronique au véhicule (30) et pour déclencher les étapes de transformation (31) et de transmission (32a, 32b) par activation du dispositif de transition en réponse à la détection de connexion (30).

7. Système de contrôle selon la revendication précédente, dans lequel à la suite de l'activation du dispositif de transition, la détection d'une commande (32a) par le premier module de détection entraine l'envoi de la première instruction de commande au dispositif électronique (33a).

8. Système de contrôle selon l'une des revendications précédentes, dans lequel la transformation (31) du au moins un dispositif de commande du véhicule en un au moins un moyen de commande du dispositif électronique est basé sur un système de changement de source.

9. Système de contrôle selon l'une des revendications précédentes, dans lequel le dispositif de reconnaissance vocale est adapté pour distinguer des commandes vocales standard des commandes vocales spécifiques à une application donnée du dispositif électronique.

10. Système de contrôle selon l'une des revendications précédentes, dans lequel les au moins un dispositifs commande associés à des fonctions de sécurité du véhicule sont adaptés pour conserver leur fonctionnalité native.

11. Procédé de contrôle d'un dispositif électronique à partir d'un véhicule par un système de contrôle selon l'une des revendications 1 à 10, **caractérisé en ce qu'**il comporte les étapes suivantes :
- établissement d'une connexion entre le véhicule et le dispositif électronique (30) ;
- en réponse à l'établissement de la connexion (30), transformer au moins un dispositif de commande du véhicule en au moins un moyen de commande du dispositif électronique (31) ;
- détecter une commande manuelle via un premier module de détection (32a) ou une instruction vocale via un second module de détection (32b).

12. Procédé de contrôle selon la revendication 11, dans lequel il comporte une étape en réponse à la détection d'une commande manuelle (32a), de transmission au dispositif électronique d'une première instruction de commande associée à une fonction de contrôle direct du dispositif électronique (33a) ;

13. Procédé de contrôle selon la revendication 11, dans lequel il comporte une étape en réponse à la détection d'une instruction vocale (32b), de transmission au dispositif électronique d'une seconde instruction de commande associée à une fonction d'assistant vocal du dispositif électronique (33b).
